# EUROPEAN PATENT APPLICATION

(11) **EP 4 810 353 A1**
(43) Date of publication of application: **23.09.2026**
(21) Application number: 23959005.2
(22) Date of filing: 21.12.2023
(51) Int. Cl.: B62D 25/02, B62D 27/02

(54) **SIDE SILL FOR VEHICLE**

(30) Priority: 15.11.2023 KR 20230158011
(71) Applicant: POSCO Co., Ltd, Gyeongsangbuk-do 37859 (KR)
(72) Inventor: KIM, Jaehyun, Incheon 21985 (KR); LEE, Hong-Woo, Incheon 21985 (KR); LEE, Gyu-Min, Incheon 21985 (KR); KIM, Hwi-Geon, Incheon 21985 (KR)
(74) Representative: Meissner Bolte Partnerschaft mbB
(86) International application number: PCT/KR2023/021228
(87) International publication number: WO 2025/105578

(57) **Abstract**

The present invention relates to a side sill for a vehicle, comprising: a side sill frame including a hollow part; a connection frame disposed in the hollow part in the longitudinal direction of the side sill frame and including a flange bonded to the side sill frame; and a reinforcing frame disposed in the hollow part in the longitudinal direction of the side sill frame, bonded to the connection frame, and having a unit section with a variable height.

## Description

### Technical Field

The present invention relates to a side sill for a vehicle.

### Background Art

It is clarified that the contents described in this section merely provide background information relating to the present invention and are not to be construed as comprising prior art.

A side sill for a vehicle may protect passengers by serving to absorb collision energy in a side collision.

A side sill applied to an eco-friendly vehicle, such as an electric vehicle, may serve to protect not only passengers but also a battery disposed below a floor surface. The battery may have a larger volume, as compared to other components of the vehicle, and accordingly, a lateral space of a vehicle equipped with such a battery may thus be narrower than that of a vehicle equipped with an internal combustion engine.

Accordingly, the side sill applied to an eco-friendly vehicle is required to absorb as much collision energy as possible within a narrow space, and, in order to improve energy efficiency of the eco-friendly vehicle, the side sill is required to have a minimum weight.

To this end, an extruded aluminum material has been applied to use in the side sill of an eco-friendly vehicle. However, improvement of collision energy absorption capability and achievement of weight reduction has been continuously required.

(Patent Document 1) KR 20-1998-0043143 U (1998.09.25)

### Summary of Invention

### Technical Problem

An aspect of the present invention is to provide a side sill having improved collision energy absorption efficiency and weight reduction.

An aspect of the present invention is to provide a side sill having increased rigidity, reduced manufacturing costs including molding costs, and improved ease of assembly as compared to a conventional side sill.

### Solution to Problem

An aspect of the present invention provides a side sill for a vehicle formed as follows to achieve the above-described objective.

According to an aspect of the present invention, provided is a side sill for a vehicle, the side sill including: a side sill frame including a hollow portion; a connection frame disposed in the hollow portion in a longitudinal direction of the side sill frame and including a flange joined to the side sill frame; and a reinforcing frame disposed in the hollow portion in the longitudinal direction of the side sill frame, joined to the connection frame, and having a unit section with a variable height.

The connection frame may include a connection portion extending across the hollow portion and which may be at least partially in contact with the reinforcing frame.

The unit section may include: planar portions including a first planar portion disposed parallel to the longitudinal direction of the side sill frame and a second planar portion disposed in a position lower than the first planar portion; and inclined portions connected to the planar portions, respectively, and inclined.

### Advantageous Effects of Invention

Through the above-described structure, the side sill according to the present invention can improve collision energy absorption efficiency and achieve weight reduction.

In addition, the side sill according to the present invention can provide increased rigidity, reduced manufacturing costs including molding costs, and improved ease of assembly.

### Brief Description of Drawings

FIG. 1 is a perspective view of a side sill according to an example embodiment of the present invention.
FIG. 2 is another perspective view of the side sill according to an example embodiment of the present invention.
FIG. 3 is a perspective view of a connection frame according to an example embodiment of the present invention.
FIG. 4 is a perspective view of a reinforcing frame according to an example embodiment of the present invention.
FIG. 5 is a perspective view of a reinforcing structure included in the side sill according to the first embodiment of the present invention.
FIG. 6 is an exploded view of the reinforcing structure included in the side sill according to the first embodiment of the present invention.
FIG. 7 is a cross-sectional view taken along line A-A' of FIG. 5 illustrating the side sill according to the first embodiment of the present invention.
FIG. 8 is a cross-sectional view taken along line B-B' of FIG. 5 illustrating the side sill according to the first embodiment of the present invention.
FIG. 9 is an exploded view of a reinforcing structure included in a side sill according to a second embodiment of the present invention.
FIG. 10 is an exploded view of a reinforcing structure included in a side sill according to a third embodiment of the present invention.
FIG. 11 is an exploded view of a reinforcing structure included in a side sill according to a fourth embodiment of the present invention.
FIG. 12 is a perspective view of a reinforcing structure included in a side sill according to an example embodiment of a related invention.
FIG. 13 is a view illustrating an experiment in which a side collision is applied to a portion of a vehicle body structure including the reinforcing structure of the present invention illustrated in FIG. 12, wherein FIG. 13A is a schematic cross-sectional view before an impact is applied, and FIG. 13B is a schematic cross-sectional view after the impact is applied.
FIG. 14 is a view illustrating an experiment in which a side collision is applied to a portion of a vehicle body structure including the reinforcing structure according to the first embodiment of the present invention, as illustrated in FIG. 5, wherein FIG. 14A is a schematic cross-sectional view before an impact is applied, and FIG. 14B is a schematic cross-sectional view after the impact is applied.

### Mode for Invention

Hereinafter, specific embodiments of the present invention will be described with reference to the accompanying drawings. However, the technical spirit of the present invention is not limited to the presented embodiments, and a person skilled in the art who understands the technical spirit of the present invention may easily propose other embodiments included within the scope of the technical spirit of the present invention or other regressive inventions through the addition, modification, or deletion of other components within the same technical spirit, and such embodiments are also included within the scope of the technical spirit of the present invention.

Hereinafter, in the accompanying drawings, an X-axis represents a width direction of a side sill, a Y-axis represents a longitudinal direction of the side sill, and a Z-axis represents a height direction of the side sill. In addition, only a part of a configuration extending in the longitudinal direction of the side sill may be illustrated.

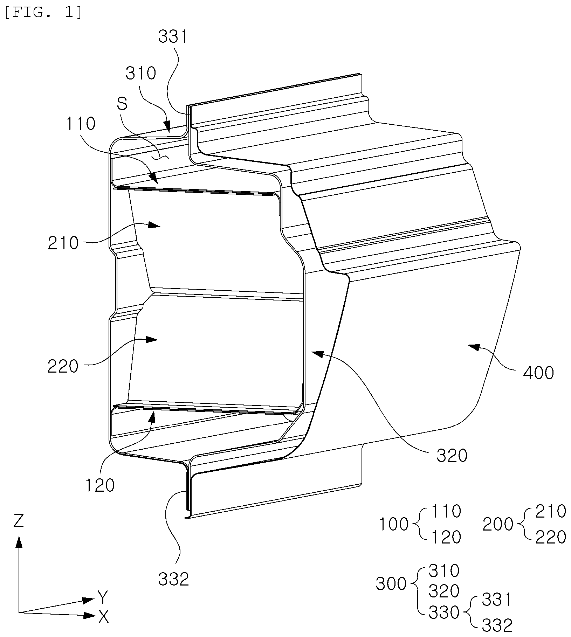

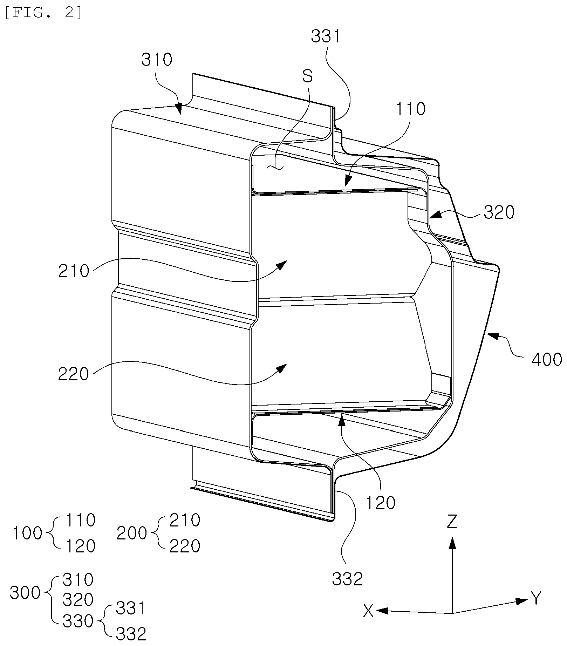

FIGS. 1 and 2 illustrate perspective views of a state in which a side sill according to an example embodiment of the present invention is cut in the width direction. FIG. 1 is a perspective view seen from outside of a vehicle toward an inside of the vehicle, based on a case in which the side sill according to an example embodiment of the present invention is provided in the vehicle, and FIG. 2 is a perspective view seen from the inner side toward the outer side.

The side sill according to an example embodiment of the present invention may include a side sill frame 300, a connection frame 100, and a reinforcing frame 200.

The side sill frame 300 may include a hollow portion S formed therein and may have a shape elongated in a longitudinal direction.

For example, the side sill frame 300 may include a first side sill frame 310 disposed on an inner side of a vehicle and a second side sill frame 320 joined to the first side sill frame 310 and disposed on an outer side of the vehicle.

The side sill frame 300 may be formed as a single member. However, for convenience of assembly and manufacture, the side sill frame 300 may include the first side sill frame 310 and the second side sill frame 320, and a joint 330 at which the first side sill frame 310 and the second side sill frame 320 are integrally joined to each other may be formed. The joint 330 may include a first joint 331 and a second joint 332 at different positions in a height direction.

The side sill according to an example embodiment of the present invention may further include an outer frame 400 disposed on the outer side of the vehicle and coupled to the second side sill frame 320. The outer frame 400 may be an exterior of the vehicle or may be another frame structure provided on an outer side of the second side sill frame 320 other than the exterior.

The connection frame 100 may be disposed in the hollow portion S in the longitudinal direction of the side sill frame 300 and may be joined to the side sill frame 300.

The connection frame 100 may be connected to the side sill frame 300 and the reinforcing frame 200 to be described below and may facilitate assembly, as compared to a case in which the reinforcing frame 200 is directly joined to the side sill frame 300.

For example, when the connection frame 100 and the reinforcing frame 200 are joined before the connection frame 100 and the side sill frame 300 are joined, a shape of the connection frame 100 and the reinforcing frame 200 may facilitate joining such as welding and an angle of the connection frame 100 and the reinforcing frame 200 may facilitate a joining operation compared to a case in which the reinforcing frame 200 is directly joined to the side sill frame 300.

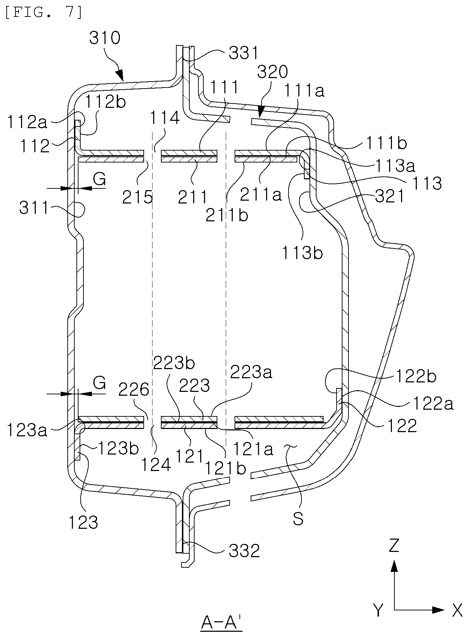

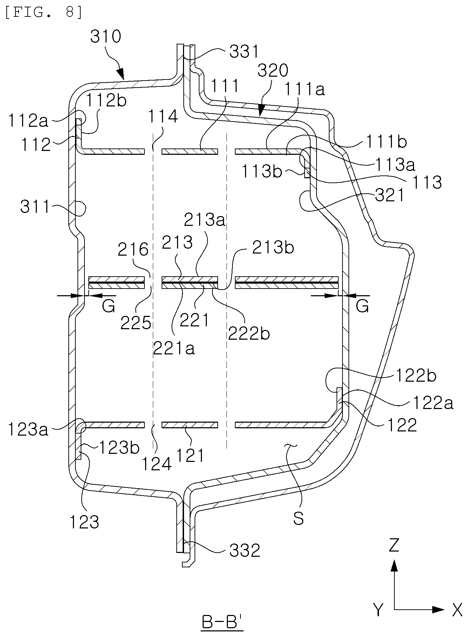

In addition, the reinforcing frame 200 and the side sill frame 300 may be joined to each other through the connection frame 100 and are not directly joined by welding or the like, thereby minimizing a gap G (see FIGS. 7 and 8) between the reinforcing frame 200 and the side sill frame 300. Accordingly, a side collision may be more effectively transmitted to and absorbed by the reinforcing frame 200.

The reinforcing frame 200 may be disposed in the hollow portion S in the longitudinal direction of the side sill frame 300, may be joined to the connection frame 100, and may have a unit section u with a variable height.

The reinforcing frame 200 may be disposed in the hollow portion S of the side sill frame 300, thereby increasing impact absorption capability against a side collision of the vehicle and protecting components included in an electric vehicle such as a battery disposed inside the side sill.

By disposing the connection frame 100 and the reinforcing frame 200 to be spaced apart from an upper surface and a lower surface of the side sill frame 300, respectively, the connection frame 100 and the reinforcing frame 200 may be disposed in a central region in a Z-axis direction to implement a maximum deformation load when an impact is applied in an X-axis direction or the like under a situation of a side collision, thereby improving collision energy absorption efficiency while achieving vehicle weight reduction to a maximal extent.

For example, at least one of the side sill frame 300, the reinforcing frame 200, and the connection frame 100 may be formed of steel.

Accordingly, mechanical strength of the side sill for a vehicle may be improved. In addition, collision energy absorption capability may be further improved, as compared to a side sill for a vehicle formed of aluminum having the same weight (not shown). Accordingly, when compared to the side sill for a vehicle formed of aluminum, a side sill for a vehicle having improved collision energy absorption capability compared to the side sill for a vehicle formed of aluminum may be implemented while preventing an increase in a load of an entire vehicle.

For example, the reinforcing frame 200 or the connection frame 100 may be formed of a single steel plate. The reinforcing frame 200 or the connection frame 100 may be formed by bending a single steel plate. Accordingly, mechanical strength of the reinforcing frame 200 or the connection frame 100 may be further improved and manufacturing cost reduction may be achieved.

In an example embodiment of the present invention, the reinforcing frame 200 may have any one value, the value having a tensile strength of 1180 MPa or more and having a yield strength of 850 MPa or more and 1060 MPa or less.

When the side sill for a vehicle is formed of steel as described above, collision energy absorption capability thereof may be at least equal to or greater than collision energy absorption capability of the side sill for a vehicle formed of aluminum having the same weight.

Accordingly, when compared to a case in which the side sill is formed of aluminum, the side sill may be reduced in weight while improving collision energy absorption efficiency to an equivalent level or higher.

According to the side sill for a vehicle of the present invention as described above, when a load is applied in the X-axis direction, compressive deformation of the side sill for a vehicle in the X-axis direction may be facilitated and impact absorption capability may be improved. Accordingly, transmission of impact to a space in which the battery for a vehicle is disposed (not shown) and a space in which passengers are disposed may be minimized.

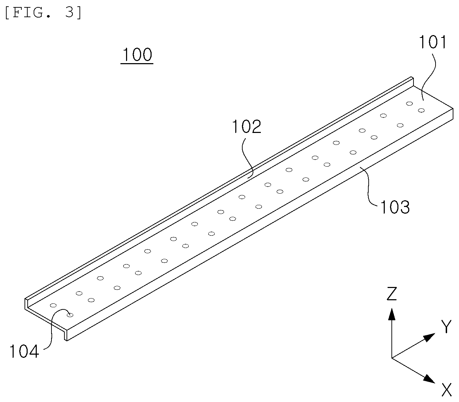

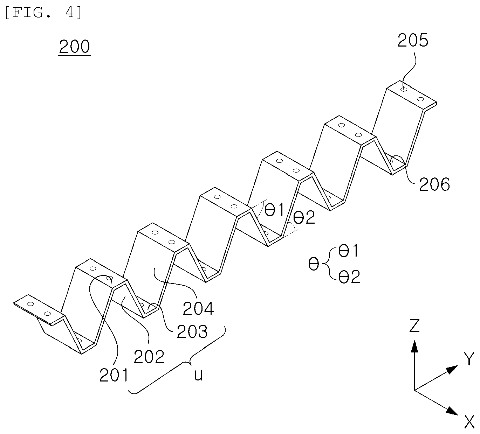

Hereinafter, the connection frame is described with reference to FIG. 3, and the reinforcing frame is described with reference to FIG. 4.

FIG. 3 is a perspective view illustrating a part of the connection frame according to an example embodiment of the present invention. The connection frame may have a shape elongated in the longitudinal direction and may have the same shape repeatedly formed in the longitudinal direction.

For example, the connection frame 100 may include flanges 102 and 103 joined to an inner surface of the side sill frame 300 and a connection portion 101 disposed parallel to the width direction of the side sill and in contact with the reinforcing frame 200 in at least a partial region.

The connection frame 100 may have the flanges 102 and 103 to be surface-joined to the side sill frame 300. In addition, the connection portion 101 extending across the hollow portion S of the side sill may increase rigidity against a side collision. For example, the connection portion 101 may be formed to be parallel to the width direction. The connection portion 101 formed parallel to the width direction may have a shorter length and reduced weight compared to a case in which the connection portion 101 is not formed parallel to the width direction.

For example, the flanges 102 and 103 of the connection frame 100 may include the first flange 102 joined to the first side sill frame 310 and the second flange 103 joined to the second side sill frame 320. Joining at both sides of the side sill frame 300 and the connection frame 100 may increase joining strength.

For example, the first flange 102 and the second flange 103 may extend from the connection portion 101, and the first flange 102 and the second flange 103 may extend in different directions relative to the height direction.

The first flange 102 and the second flange 103 may be formed to extend from the connection portion 101 and may be integrally formed to each other. When the first flange 102 extends in a direction in which the height direction increases, the second flange 103 may extend in a direction in which the height direction decreases. When the first flange 102 extends in a direction in which the height direction decreases, the second flange 103 may extend in a direction in which the height direction increases. The first flange 102 and the second flange 103 may extend in different directions, thereby maintaining a state in which the flanges are joined to the side sill frame 300 even when the side sill frame 300 is deformed by twisting or the like due to an external impact or the like. However, the first flange 102 and the second flange 103 may extend in the same direction and are not limited to extending in different directions as described above.

For example, the first flange 102 and the second flange 103 may be formed of a single steel plate together with the connection portion 101, and may be formed by bending processing.

The connection frame 100 may be formed of a single steel plate. The connection portion 101, the first flange 102, and the second flange 103 may be integrally formed with one another and may be manufactured by bending the steel plate. The connection frame 100 may be manufactured by performing only the bending processing to form the connection portion 101 and the flanges, thereby reducing costs, as compared to processing using a press mold or the like.

For example, a first through-hole 104 may be formed in the connection portion 101.

The first through-hole 104 formed in the connection portion 101 may be a hole formed to be aligned with a through-hole of the reinforcing frame 200 to be described below to facilitate positional alignment during joining. A positioning pin of an assembly jig may pass through the first through-hole 104 to align positions between the connection frame 100 and the reinforcing frame 200. In addition, the first through-hole 104 may be used to remove an air pocket or to allow smooth flow of an electrodeposition coating solution during electrodeposition coating of a vehicle body.

FIG. 4 is a perspective view illustrating a part of the reinforcing frame according to an example embodiment of the present invention.

The reinforcing frame 200 may have a shape elongated in the longitudinal direction, and the unit section u having the same shape may be repeatedly formed in the longitudinal direction. This configuration is provided for simultaneously achieving weight reduction and improvements in collision energy absorption efficiency against a side collision.

For example, the reinforcing frame 200 may include the repeated unit sections u, and each unit section u may include planar portions 101 and 103 and inclined portions 102 and 104 connected to the planar portions 101 and 103, respectively.

The planar portions 101 and 103 may include a first planar portion 201 and a second planar portion 203. The first planar portion 201 may be disposed parallel to the longitudinal direction of the side sill frame 300, and the second planar portion 203 may be disposed in a position lower than the first planar portion 201.

The inclined portions 102 and 104 may be connected to the planar portions 101 and 103, respectively, may be inclined, and may include a first inclined portion 202 and a second inclined portion 204. The first inclined portion 202 may be connected to the first planar portion 201 and may be inclined downwardly. The second inclined portion 204 may be connected to the second planar portion 203 and may be inclined upwardly.

As the unit section u is repeated, the first planar portion 201, the first inclined portion 202, the second planar portion 203, and the second inclined portion 204 may configure the unit section u, and may be continuously arranged in the longitudinal direction and repeated in an upper and lower direction.

The unit section u may be formed only by bending processing, thereby reducing cost compared to processing using the press mold or the like.

For example, lengths of the first planar portion 201 and the second planar portion 203 in the longitudinal direction may be identical to each other. However, the first planar portion 201 and the second planar portion 203 may be formed parallel to each other without limitation.

The first inclined portion 202 and the second inclined portion 204 may be formed to be symmetrical relative to the first planar portion 201 or the second planar portion 203. However, the first inclined portion 202 and the second inclined portion 204 may not be formed to be symmetrical when an inclination angle θ1 formed between an extension line of the first planar portion 201 and the first inclined portion 202 and an inclination angle θ2 formed between an extension line of the second planar portion 203 and the second inclined portion 204 are different from each other.

For example, an inclination angle θ formed between an extension line of the first planar portion 201 and the inclined portion 101 or 103 or between an extension line of the second planar portion 203 and the inclined portion 101 or 103 may be 40° to 80°.

When greater energy absorption is required, the inclination angle θ may be formed closer to 80°, and when minimum weight is required, the inclination angle θ may be formed closer to 40°. When the inclination angle θ exceeds 80°, weight may become excessively large, and when the inclination angle θ is less than 40°, energy absorption may not be achieved in a desired amount. In the present invention, when approximately 60° is generally used, weight reduction and energy absorption may be achieved at an appropriate level. However, the angle may be designed to be adjusted according to a required degree of energy absorption and weight reduction as described above.

For example, a second through-hole 205 may be formed in the first planar portion 201, and a third through-hole 206 may be formed in the second planar portion 203.

Among the plurality of first through-holes 104, some of the plurality of first through-holes 104 may be disposed at the same position in the longitudinal and width directions as the second through-hole 205 formed in the first planar portion 201, and the others of the plurality of first through-holes 104 may be disposed at the same position in the longitudinal and width directions of the side sill frame as the third through-hole 206 formed in the second planar portion 203.

The second through-hole 205 or the third through-hole 206 may facilitate position determination by allowing the positioning pin of the assembly jig of the reinforcing frame 200 and the connection frame 100 to pass through the second through-hole 205 or the third through-hole 206 while being aligned with the first through-hole 104, and when the plurality of reinforcing frames 200 are provided, position determination between the reinforcing frames 200 may also be facilitated. In addition, the second through-hole 205 or the third through-hole 206 may be used to remove an air pocket or to allow smooth flow of an electrodeposition coating solution during electrodeposition coating of a vehicle body.

When the reinforcing frame 200 and the connection frame 100 are joined to each other by welding or the like, joining may be performed by spot welding, laser welding, or the like at positions where through-holes are not formed. Here, a position at which a joint portion caused by welding or the like is not to be structurally formed may be easily identified using the second through-hole 205 and the third through-hole 206.

Hereinafter, in a specific embodiment, the plurality of reinforcing frames 200 or the plurality of connection frames 100 may be provided. In the following description, a structure of the reinforcing frame 200 and the connection frame 100 is defined as a reinforcing structure.

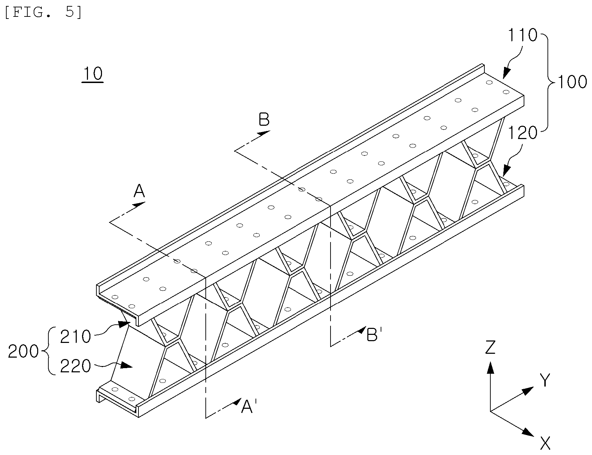

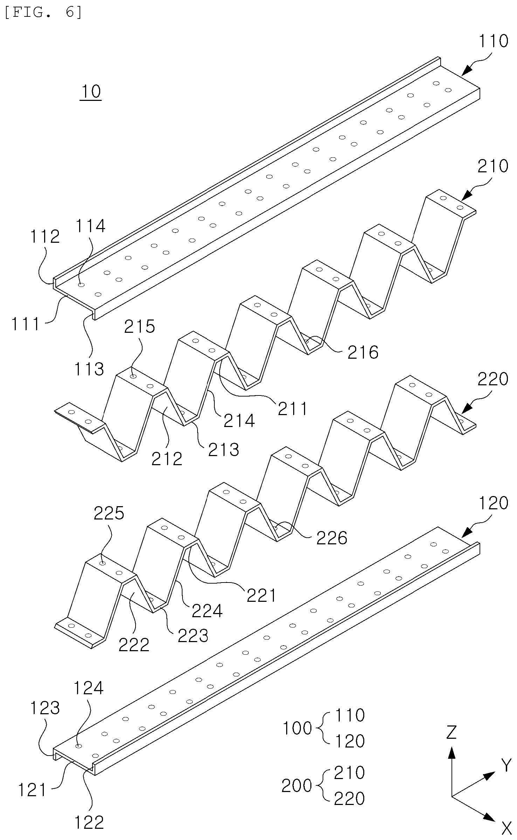

FIG. 5 illustrates a perspective view of a reinforcing structure including the reinforcing frame and the connection frame except for the side sill frame in a side sill according to a first embodiment of the present invention, and FIG. 6 illustrates an exploded view of the reinforcing structure illustrated in FIG. 5 including the reinforcing frame and the connection frame.

For example, the plurality of reinforcing frames 200 may be provided, and a second planar portion 213 of a first reinforcing frame 210 which is one of the plurality of reinforcing frames 200 and a first planar portion 221 of a second reinforcing frame 220 which is one of the plurality of reinforcing frames 200 other than the first reinforcing frame 210 may be in contact with each other. In addition, lengths of the unit section u of the first reinforcing frame 210 and the second reinforcing frame 220 may be identical to each other
In addition, the plurality of connection frames 100 may be provided, a first connection frame 110 which is one of the plurality of connection frames 100 may be in contact with a first planar portion 211, and a second connection frame 120 which is one of the plurality of reinforcing frames 200 other than the first connection frame 110 may be in contact with a second planar portion 223.

The side sill according to the first embodiment may include the side sill frame 300, and two reinforcing frames 200 and two connection frames 100 included in a reinforcing structure 10.

The second planar portion 213 of the first reinforcing frame 210 which is one of the two reinforcing frames 200 and the first planar portion 211 of the second reinforcing frame 220 which is the other reinforcing frame 200 other than the first reinforcing frame 210 may be in contact with each other. In addition, the lengths of the unit section u of the first reinforcing frame 210 and the second reinforcing frame 220 may be identical to each other.

The two reinforcing frames 200 may be symmetrically disposed relative to the second planar portion 213 of the first reinforcing frame 210 and the first planar portion 221 of the second reinforcing frame 220, which are contact surfaces between the two reinforcing frames 200.

In addition, the side sill may include the first connection frame 110 which is one of the two connection frames 100 and the second connection frame 120 which is the other of the two connection frames 100. The first connection frame 110 may be in contact with and fixed to the first reinforcing frame 210, and the second connection frame 120 may be in contact with and fixed to the second reinforcing frame 220. In addition, similar to the reinforcing frame 200, the first connection frame 110 and the second connection frame 120 may be formed to be relative to the second planar portion 213 of the first reinforcing frame 210 and the first planar portion 221 of the second reinforcing frame 220, which are the contact surfaces between the two reinforcing frames 200.

FIGS. 7 and 8 are referred to for a detailed description of the side sill according to the first embodiment. FIG. 7 illustrates a cross-section taken along line A-A' of FIG. 5, and FIG. 8 illustrates a cross-section taken along line B-B' of FIG. 5, which illustrate a state in which the side sill frame and the outer frame are further included.

The first through-hole 104 of the first connection frame 110 may be referred to as a first-1 through-hole 114, and the first through-hole 104 of the second connection frame 120 may be referred to as a first-2 through-hole 124. In addition, the second through-hole 205 of the first reinforcing frame 210 may be referred to as a second-1 through-hole 215, and the second through-hole 205 of the second reinforcing frame 220 may be referred to as a second-2 through-hole 225, and the third through-hole 206 of the first reinforcing frame 210 may be referred to as a third-1 through-hole 216, and the third through-hole 206 of the second reinforcing frame 220 may be referred to as a third-2 through-hole 226.

FIG. 7 illustrates a cross-section in which the first-1 through-hole 114 of the first connection frame 110, the second-1 through-hole 215 of the first reinforcing frame 210, the first-2 through-hole 124 of the second connection frame 120, and the third-2 through-hole 226 of the second reinforcing frame 220 are aligned.

An outer surface 112a of a first flange 112 of the first connection frame 110 may be joined to an inner surface 311 of the hollow portion S of the first side sill frame 310. In addition, an outer surface 113a of a second flange 113 of the first connection frame 110 may be joined to an inner surface 321 of the hollow portion S of the second side sill frame 320. In addition, an outer surface 123a of the second flange 123 of the second connection frame 120 may be joined to the inner surface 311 of the hollow portion S of the first side sill frame 310, and an outer surface 122a of a first flange 122 of the second connection frame 120 may be joined to an inner portion of the hollow portion S of the second side sill frame 320.

Joining between the side sill frame 300 and the connection frame 100 may be performed by using a structural adhesive. However, joining by welding may also be performed, and other joining methods are not limited.

An upper surface 211a of the first planar portion 211 of the first reinforcing frame 210 may be in contact with a lower surface 111b of a connection portion 111 of the first connection frame 110, and a lower surface 223b of the second planar portion 223 of the second reinforcing frame 220 may be in contact with an upper surface 121a of a connection portion 121 of the second connection frame 120. In addition, the side sill frame 300 and an upper surface 111a of the connection portion 111 of the first connection frame 110, and the side sill frame 300 and a lower surface 121b of the connection portion 121 of the second connection frame 120 may not be in contact with each other, and a space may be formed, thereby allowing the connection frame 100 and the reinforcing frame 200 to implement a maximum deformation load when an impact is applied in a situation in which a side collision occurs in the X-axis direction.

Joining between the connection frame 100 and the reinforcing frame 200 may be performed by welding such as spot welding, laser welding, or arc welding, and joining may also be performed using the structural adhesive.

As described above, the first connection frame 110 and the first side sill frame 310 or the second connection frame 120 and the second side sill frame 320 may be formed to be spaced apart from each other. However, a thickness of the connection frame 100 may not be large and a shape thereof may be simple, and accordingly, the gap G may thus be minimized, thereby structurally facilitating assembly and facilitating joining by welding or the like while efficiently transmitting energy due to a side collision.

FIG. 8 illustrates a cross-section in which the first-1 through-hole 114, the third-1 through-hole 216, the second-2 through-hole 225, and the first-2 through-hole 124 are aligned.

Referring to the cross-section taken along line B-B', an outer surface 112b of the first flange 112 of the first connection frame 110 may be joined to the inner surface 311 of the hollow portion S of the first side sill frame 310, an outer surface 113b of a second flange 113 of the first support frame 110 may be joined to the inner surface 321 of the hollow portion S of the second side sill frame 320, an outer surface 123b of the second flange 123 of the second connection frame 120 may be joined to an inner surface 311a of the hollow portion S of the first side sill frame 310, and an outer surface 122b of the first flange 122 of the second connection frame 120 may be joined to the inner surface 321 of the hollow portion S of the second side sill frame 320.

However, a contact surface between the first reinforcing frame 210 and the second reinforcing frame 220 may be formed, and the first reinforcing frame 210 and the second reinforcing frame 220 may be formed to be symmetrical in a height direction relative to the contact surface. A lower surface 213b of the second planar portion 213 of the first reinforcing frame 210 may be in contact with an upper surface 221a of the first planar portion 221 of the second reinforcing frame 220, and joining may be performed between the contact surfaces by various joining methods such as spot welding.

In addition, sizes of empty spaces between the first connection frame 110 and an upper surface 213a of the second planar portion 213 of the first reinforcing frame 210, and between the second connection frame 120 and a lower surface 221b of the first planar portion 221 of the second reinforcing frame 220 may vary according to the inclination angle θ.

In addition, similar to the cross-section taken along line A-A', the gap G may be formed between the side sill frame 300 and the first reinforcing frame 210 and between the side sill frame 300 and the second reinforcing frame 220 in the cross-section taken along line B-B'.

Hereinafter, in second to fourth embodiments, shapes and structures of individual configurations of the reinforcing frame 200 and the connection frame 100 may be identical to those described in the first embodiment, and differences may exist in arrangement relationships, sizes, and the like.

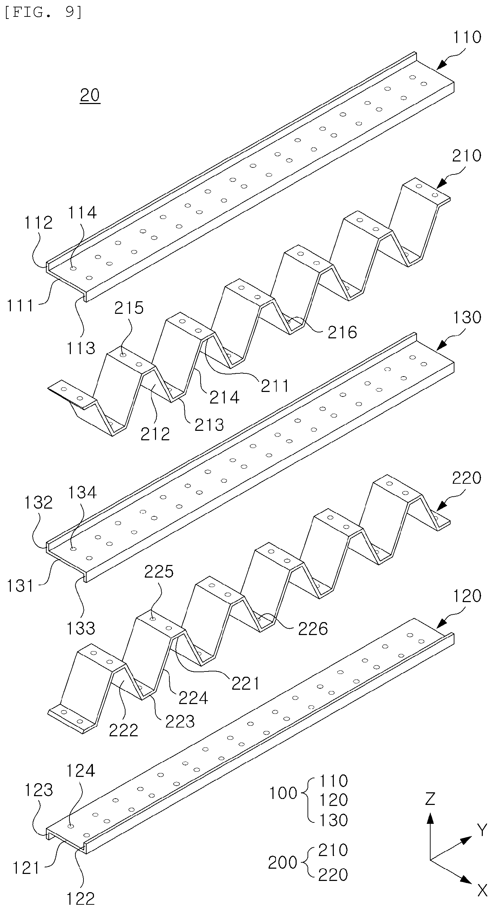

FIG. 9 illustrates a side sill according to the second embodiment, and illustrates an exploded view of the connection frame and the reinforcing frame excluding the side sill frame.

A reinforcing structure 20 of the side sill according to the second embodiment may include three connection frames 100 and two reinforcing frames 200.

For example, the plurality of reinforcing frames 200 may be provided, the second planar portion 213 of the first reinforcing frame 210 which is one of the plurality of reinforcing frames 200 may be in contact with a first surface of the connection portion 111, and the first planar portion 221 of the second reinforcing frame 220 which is one of the plurality of reinforcing frames 200 other than the first reinforcing frame 210 may be in contact with a second surface of the connection portion 121 parallel to the first surface of the connection portion 121.

According to the second embodiment, a third connection frame 130 which is the connection frame 100 provided/disposed between the first reinforcing frame 210 and the second reinforcing frame 220 may be further provided. Accordingly, in the side sill according to the second embodiment, the first connection frame 110, the first reinforcing frame 210, the third connection frame 130, the second reinforcing frame 220, and the second connection frame 120 may be provided in order.

Unlike the first embodiment in which the lower surface of the second planar portion 213 of the first reinforcing frame 210 and the upper surface of the first planar portion 221 of the second reinforcing frame 220 are in contact with each other, the lower surface of the second planar portion 213 of the first reinforcing frame 210 may be in contact with an upper surface of a connection portion 131 of the third connection frame 130, and the upper surface of the first planar portion 221 of the second reinforcing frame 220 and a lower surface of the connection portion 131 of the third connection frame 130 may be in contact with each other.

Accordingly, rigidity against a side collision may increase and joining between the side sill frame 300 and the reinforcing structure may be strengthened.

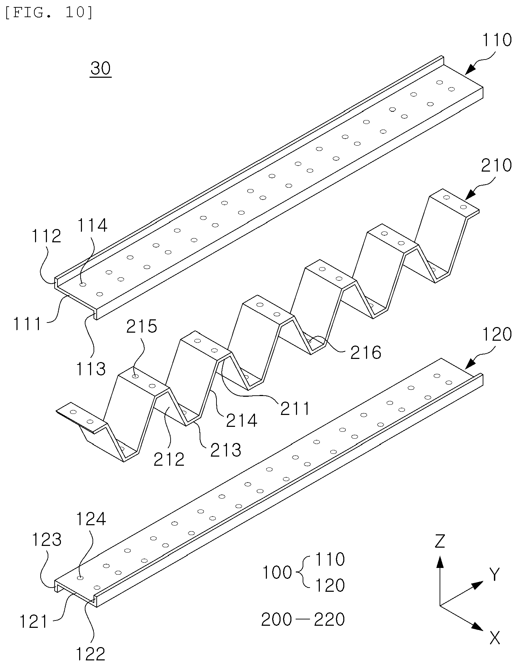

FIG. 10 illustrates an exploded view of a reinforcing structure of a side sill according to a third embodiment.

A reinforcing structure 30 according to the third embodiment may include two connection frames 100 and one reinforcing frame 200. One first reinforcing frame 210 which is one reinforcing frame 200 may be disposed between the first connection frame 110 and the second connection frame 120.

The upper surface of the first planar portion 211 of the first reinforcing frame 210 may be in contact with the lower surface of the connection portion 111 of the first connection frame 110, and the lower surface of the second planar portion 223 of the first reinforcing frame 210 may be in contact with and joined to the upper surface of the connection portion 121 of the second connection frame 120.

In this case, compared to the first embodiment or the second embodiment, joining between the side sill frame 300 and the reinforcing structure may be strengthened while facilitating weight reduction.

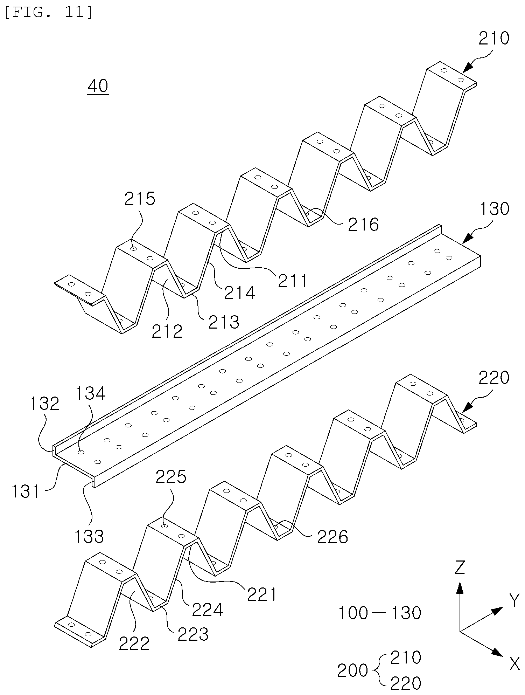

FIG. 11 illustrates an exploded view of a reinforcing structure according to a fourth embodiment.

A reinforcing structure 40 of the side sill according to the fourth embodiment may include two reinforcing frames 200 and one connection frame 100.

In this case, the first reinforcing frame 210, the third connection frame 130, and the second reinforcing frame 220 may be provided, and the first connection frame 110 may be joined at a central portion of the hollow portion S of the side sill frame 300 and may thus be joined to the side sill frame 300.

The lower surface of the second planar portion 213 of the first reinforcing frame 210 and the upper surface of the connection portion 131 of the third connection frame 130 may be in contact with each other, and the upper surface of the first planar portion 221 of the second reinforcing frame 220 and the lower surface of the connection portion 131 of the third connection frame 130 may be in contact with each other. In this case, such a configuration may be adopted to increase energy absorption capability due to a side collision and achieve weight reduction.

In all the embodiments of the present invention, joining between structures may be performed by welding or by applying the structural adhesive. However, various joining methods, such as riveting, self-piercing riveting, and flow drill screwing, may also be used.

In addition, the number of reinforcing frames 200 and the number of connection frames 100, and an internal arrangement structure thereof are not limited to the example embodiments described above and may be variously provided.

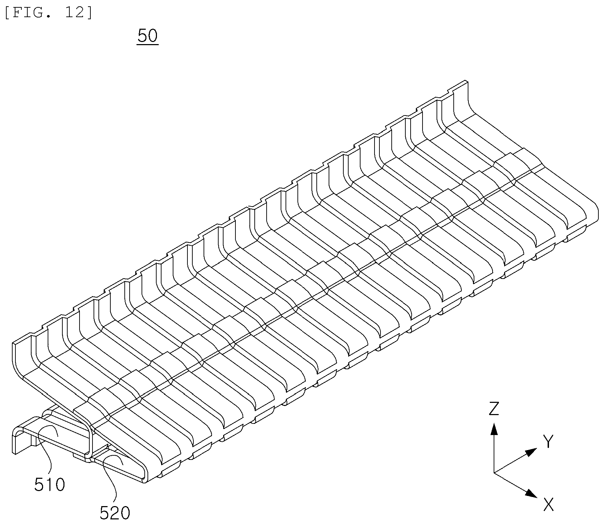

FIG. 12 illustrates a reinforcing structure included in a related side sill.

A reinforcing structure 50 of the related side sill may extend in a longitudinal direction and may not include a connection frame, and may have a reinforcing frame having a unit structure different from that of the present invention and extending in the longitudinal direction of a side sill frame. In addition, a plurality of reinforcing frames 510 and 520 may not be arranged in an upper and lower direction and may be coupled to each other in the width direction from an inner side toward an outer side. In addition, the side sill frame and the reinforcing frames 510 and 520 are directly joined.

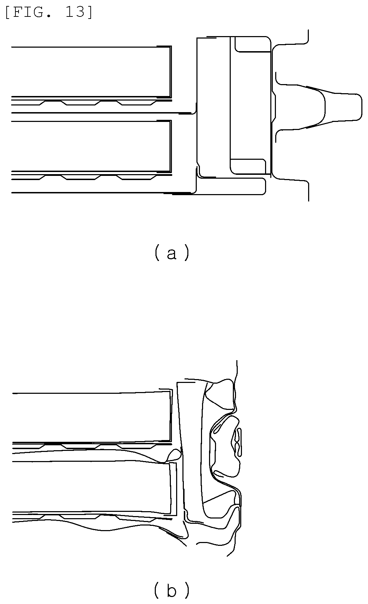

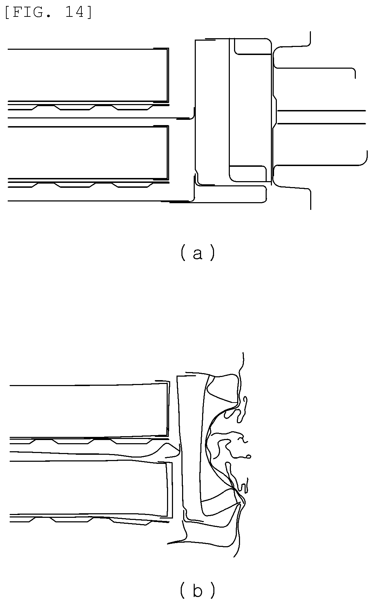

FIG. 13 illustrates deformation in a related side sill structure due to a side collision, and FIG. 14 illustrates deformation in the side sill structure according to the first embodiment of the present invention due to a side collision, wherein FIGS. 13A and 14A illustrate a state before the collision occurs, and FIGS. 13B and 14B illustrate a deformed state after the collision occurs.

In FIGS. 13A, 13B, 14A, and 14B, a second side sill frame according to an example embodiment of the present invention or a corresponding configuration is excluded, and an inner structure of a first side sill frame is schematically illustrated as a part of a battery frame. An interior of the battery frame indicates a battery space in which a battery for an electric vehicle is mounted.

Referring to FIG. 13B, it can be seen that an impact is not sufficiently absorbed in the reinforcing structure of the side sill, thereby causing deformation in a lower battery space. Accordingly, the battery may receive the impact and a safety issue may thus occur.

In contrast, referring to FIG. 14B, it can be seen that the reinforcing structure is completely crumpled and sufficiently absorbs an impact, thus preventing deformation from occurring in the battery space.

Specifically, in the reinforcing structure of the side sill according to the first embodiment of the present invention, when a mass is formed to have 15.1 kg, an energy absorption amount (Total Internal Energy) generated due to a side collision may be 27.2 kJ, and an energy absorption amount (Total IE/Mass) per unit mass may be 1.80 kJ/kg. When such a side collision is applied, in a section in which inward deformation occurs most at a predetermined reference time, e.g., 45 milliseconds (ms) after the collision, displacement of the first side sill frame 310 may be 52.5 mm, and displacement of the second side sill frame 320 may be 107.3 mm.

In comparison, in the reinforcing structure illustrated in FIG. 12, when a mass is formed to have 13.9 kg, an energy absorption amount generated due to a side collision may be 22.8 kJ, and an energy absorption amount (Total IE/Mass) per unit mass may be 1.64 kJ/kg. When such a side collision is applied, in a section in which inward deformation occurs most at the predetermined reference time, e.g., 45 ms after the collision, displacement of the first side sill frame may be 51.3 mm, and displacement of the second side sill frame may be 104.0 mm.

According to the above results, in the reinforcing structure according to the first embodiment of the present invention, the energy absorption amount per unit mass may increase compared to the related reinforcing structure. Although displacement of the second side sill frame 320 may significantly differ, the internal reinforcing structure may effectively crumple and absorb energy. Accordingly, displacement of the second side sill frame 320 may decrease compared to that of the related structure, thereby safely protecting an internal vehicle body configuration, particularly a battery of an electric vehicle.

While the example embodiments have been shown and described above, it will be apparent to those skilled in the art that modifications and variations could be made without departing from the scope of the present invention as defined by the appended claims.

### Description of Reference Characters

10: Reinforcing Structure According to First Embodiment 20: Reinforcing Structure According to Second Embodiment
30: Reinforcing Structure According to Third Embodiment 40: Reinforcing Structure According to Fourth Example Embodiment
50: Reinforcing Structure According to Related Example Embodiment 100: Connection Frame
101: Connection Portion 102: First Flange
103: Second Flange 104: First through-Hole
110: First Connection Frame 120: Second Connection Frame
130: Third Connection Frame 200: Reinforcing Frame
201: First planar Portion 202: First Inclined Portion
203: Second planar Portion 204: Second Inclined Portion
205: Second through-Hole 206: Third through-Hole
210: First Reinforcing Frame 220: Second Reinforcing Frame
300: Side Sill Frame 310: First Side Sill Frame
320: Second Side Sill Frame 330: Side Sill Frame Joint
400: Outer Frame 510,520: Related Reinforcing Frames
S: hollow Portion U: Unit Section
Θ: Inclination Angle

## Claims

1. A side sill for a vehicle, the side sill comprising:
a side sill frame including a hollow portion;
a connection frame disposed in the hollow portion in a longitudinal direction of the side sill frame and including a flange joined to the side sill frame; and
a reinforcing frame disposed in the hollow portion in the longitudinal direction of the side sill frame, joined to the connection frame, and having a unit section with a variable height.

2. The side sill of claim 1, wherein the connection frame includes a connection portion extending across the hollow portion and at least partially in contact with the reinforcing frame.

3. The side sill of claim 2, wherein the side sill frame includes:
a first side sill frame disposed on an inner side of the vehicle; and
a second side sill frame joined to the first side sill frame and disposed on an outer side of the vehicle,
and the flange of the connection frame includes a first flange joined to the first side sill frame and a second flange joined to the second side sill frame.

4. The side sill of claim 3, wherein the first flange and the second flange extend from the connection portion, and the first flange and the second flange extend in different directions relative to a height direction.

5. The side sill of claim 4, wherein the first flange and the second flange are formed by bending processing.

6. The side sill of claim 2, wherein the unit section includes:
planar portions including a first planar portion disposed parallel to the longitudinal direction of the side sill frame and a second planar portion disposed in a position lower than the first planar portion; and
inclined portions connected to the planar portions, respectively, and inclined.

7. The side sill of claim 6, wherein each of angles formed between an extension line of the first planar portion and the inclined portion and between an extension line of the second planar portion and the inclined portion is 40° to 80°.

8. The side sill of claim 6, wherein the plurality of reinforcing frames are provided,
a second planar portion of a first reinforcing frame which is one of the plurality of reinforcing frames is in contact with a first planar portion of a second reinforcing frame which is one of the plurality of reinforcing frames other than the first reinforcing frame,
and lengths of the unit section of the first reinforcing frame and the second reinforcing frame are identical to each other.

9. The side sill of claim 6, wherein the plurality of reinforcing frames are provided,
a second planar portion of a first reinforcing frame which is one of the plurality of reinforcing frames is in contact with a first surface of the connection portion, and
a first planar portion of a second reinforcing frame which is one of the plurality of reinforcing frames other than the first reinforcing frame is in contact with a second surface of the connection portion parallel to the first surface of the connection portion.

10. The side sill of claim 6, wherein the plurality of connection frames are provided,
a first connection frame which is one of the plurality of connection frames is in contact with the first planar portion, and
a second connection frame which is one of the plurality of reinforcing frames other than the first connection frame is in contact with the second planar portion.

11. The side sill of claim 1, wherein at least one of the side sill frame, the reinforcing frame, and the connection frame is formed of steel.

12. The side sill of claim 1, wherein the reinforcing frame or the connection frame is formed of a single steel plate.

13. The side sill of claim 6, wherein a plurality of first through-holes are formed in the connection portion,
some of the plurality of first through-holes are disposed at the same position in the longitudinal and width directions as a second through-hole formed in the first planar portion, and
the others of the plurality of first through-holes are disposed at the same position in the longitudinal and width directions as a third through-hole formed in the second planar portion.
